# EUROPEAN PATENT APPLICATION

(11) **EP 4 793 148 A1**
(43) Date of publication of application: **19.08.2026**
(21) Application number: 26158559.0
(22) Date of filing: 13.02.2026
(51) Int. Cl.: B62D 35/00, B62D 37/02

(54) **SPORT ROAD VEHICLE WITH VARIABLE REAR AERODYNAMIC LOAD**

(30) Priority: 14.02.2025 IT 202500002838
(71) Applicant: FERRARI S.p.A., 41100 Modena (IT)
(72) Inventor: SEDDA, Salvatore, 41100 MODENA (IT); LOPES FURTADO, Jason, 41100 MODENA (IT)
(74) Representative: Studio Torta S.p.A.

(57) **Abstract**

Road vehicle with variable rear aerodynamic load; wherein the vehicle comprises a roll axis X, a pitch axis Y, a yaw axis Z, a front end penetrating the air as the vehicle moves forward, a cockpit and a rear end beyond which the aerodynamic flow detaches from the vehicle; wherein between the passenger compartment and the rear end there is an aerodynamic channel with development along the roll axis X and with an exhaust port at the rear end; wherein, at the exhaust port, the aerodynamic channel is delimited at the top by an inner face of a first aerodynamic body, at the bottom by an inner face of a diffuser body and laterally by two substantially vertical opposite walls; wherein a second aerodynamic body is provided at the exhaust port near a rear edge of the diffuser body; wherein the second aerodynamic body can rotate around an axis A parallel to the pitch axis Y.

## Description

### Cross-Reference To Related Applications

This patent application claims priority from Italian patent application no. 102025000002838 filed on February 14, 2025, the entire disclosure of which is incorporated herein by reference.

### Technical Field Of The Invention

The technical field of reference for the invention is that relating to road vehicles, in particular sports road vehicles. In this technical field, the invention will relate to a particular type of sports road vehicle equipped with a longitudinal aerodynamic channel obtained between the cockpit and the rear end and with an exhaust port at the rear end, wherein said exhaust port is delimited, at the bottom, by the trailing edge of a diffuser profile and, at the top, by a rear wing. The invention will address the problem of how to offer an inventive way to vary the rear aerodynamic load in this type of vehicle.

### State Of The Art

As it is known, a road vehicle is a vehicle whose geometry and dynamics are defined by three particular axes known as roll axis, pitch axis and yaw axis. In general, the road vehicle develops along the roll axis and comprises a front portion, simply known as the front end - which in sports vehicles is configured (for instance, it is equipped with a front wing or airfoil) to penetrate the air while moving forward, a cockpit and a rear portion (simply known as the rear end). The detachment of the aerodynamic flow travelling above and below the cockpit occurs at the rear end, thus creating the so-called wake. In sports vehicles the rear end is often provided with an aerodynamic element at the upper edge of the rear end configured to generate an aerodynamic load in the rear end. This rear aerodynamic element can be designed in the form of a wing or a spoiler, beyond which the flow travelling above the cockpit detaches from the vehicle. At the lower edge of the rear end there is a diffuser or extractor body, which has an outer face facing the surface on which the vehicle moves forward and is configured to guide the aerodynamic flow flowing below the vehicle. Therefore, the upper wing and the diffuser cooperate to generate an aerodynamic load in the rear end.

It is known to provide the vehicle with the ability to vary the aforementioned rear aerodynamic load. Currently, this ability is achieved by providing the rear wing with movable portions so as to create an aileron or a spoiler with a variable geometry.

Starting from these prior art practices, the object of the invention is to offer an inventive way to vary the rear aerodynamic load, wherein the diffuser and the rear wing mentioned above represent the upper and lower edges, respectively, of a longitudinal aerodynamic channel that develops between the cockpit and the rear end and has an exhaust port at the rear end.

### Subject-matter And Summary Of The Invention

According to the invention, there is provided a road vehicle having the ability to vary the rear aerodynamic load as defined in the appended claims.

The starting point of the invention is a road vehicle with a roll axis X, a pitch axis Y and a yaw axis Z. The minimum elements needed for the implementation of the invention, i.e. for obtaining a road vehicle with a variable rear aerodynamic load, are the presence of a front end penetrating the air as the vehicle moves forward, a cockpit and a rear end beyond which the aerodynamic flow detaches from the vehicle. Furthermore, according to the invention, the vehicle is characterized by an aerodynamic channel with development along the roll axis obtained between the cockpit and the rear end, where the channel ends with an exhaust port. Said aerodynamic channel is delimited (at least at the exhaust port) at the top by an inner face of a first aerodynamic body (in the form of a wing or a spoiler) substantially developing parallel to the pitch axis and configured to guide the aerodynamic flow travelling above the cockpit, at the bottom by an inner face of a diffuser body configured to guide the aerodynamic flow travelling below the vehicle and laterally by two substantially vertical opposite walls connecting the diffuser to the wing. Only thanks to the presence of this central aerodynamic channel is it possible to have an air flow flow along the lower surface of the upper wing and above the diffuser. In this way, the diffuser therefore has an upper surface facing the wing, which is lapped by the same flow that hits the lower surface of the wing. Hence, the exhaust port of the channel preferably has a substantially rectangular section along the plane Y-Z and occupies almost the entire transverse development of the vehicle. The channel is supplied by an upper aerodynamic flow that enters the aerodynamic channel through an upper opening obtained behind the cockpit (and/or by a front or lower aerodynamic flow that enters the aerodynamic channel from the front end or from an opening obtained at the front in the bottom of the vehicle) and a passage obtained between the cockpit and the inner face of the diffuser. At the exhaust port and near the rear edge of the diffuser body there is provided a second aerodynamic body (preferably, an airfoil) extending between the vertical walls substantially parallel to the pitch axis Y. The second aerodynamic body comprises a front edge at the rear edge of the diffuser body and an outer face shaped so as to form (in a first configuration) an extension (substantially without profile changes) of the outer face of the diffuser body. Starting from this configuration, an aspect of the invention is to have made the second aerodynamic body movable so as to also reach other configurations in the aerodynamic channel than the described one of aerodynamic extension of the diffuser. Preferably, the second aerodynamic body is coupled to the vertical walls in a rotary manner around an axis A parallel to the pitch axis Y (the rotation axis A preferably passes in the aerodynamic body in the half proximal to the front edge) to reach a second configuration in which the front edge of the second aerodynamic body has a greater distance from the rear edge of the diffuser body than in the first configuration. In this second configuration, the rear edge of the second aerodynamic body has therefore moved away from the rear wing (the second aerodynamic body is substantially horizontal). In this new position, the effect of extension of the diffuser ceases to exist and, from the aerodynamic point of view, this leads to a reduction in the aerodynamic load generated at the rear end and to an improvement in the drag of the car. A third configuration is also preferably possible, in which the front edge of the second aerodynamic body has an even greater distance from the rear edge of the diffuser body than in the first configuration. In this second configuration, the rear edge of the second aerodynamic body substantially faces downwards, interfering with the flow flowing out of the diffuser. In this way, a re-compression of the flow flowing out of the diffuser is obtained in the end portion thereof, thus obtaining as a result, on the one hand, a further reduction in the vertical load, which results in a further improvement in the drag against the forward motion of the car.

Preferably, at least in the first configuration, the front edge of the second aerodynamic body is substantially aligned along the direction Z with the rear edge of the diffuser body.

Preferably, at the exhaust port in the proximity of the inner face of the first aerodynamic body there is provided a light assembly extending between the vertical walls substantially parallel to the pitch axis.

According to an embodiment, the second aerodynamic body can comprise two or more wings in series starting from the edge of the diffuser, wherein at least one of these wings is movable to obtain the desired effects of the invention.

### Brief Description Of The Drawings

The invention will be best understood upon perusal of the following detailed description of some embodiments thereof, by mere way of non-limiting example, with reference to the accompanying drawings, in which:
- figures 1 and 2 are schematic views of an example of a road vehicle that can be improved thanks to the invention;
- figure 3 is a schematic sectional view along the plane X-Z, which shows the particular longitudinal aerodynamic channel obtained in the vehicle between the cockpit and the rear end;
- figures 4 and 5 schematically show the rear end of the vehicle and help identify the components housed in the rear exhaust port of the aerodynamic channel;
- figures 6-8 schematically show how one of the components housed in the rear exhaust port of the aerodynamic channel can assume, in an inventive manner, different configurations to vary the aerodynamic load.

### Preferred Embodiments Of The Invention

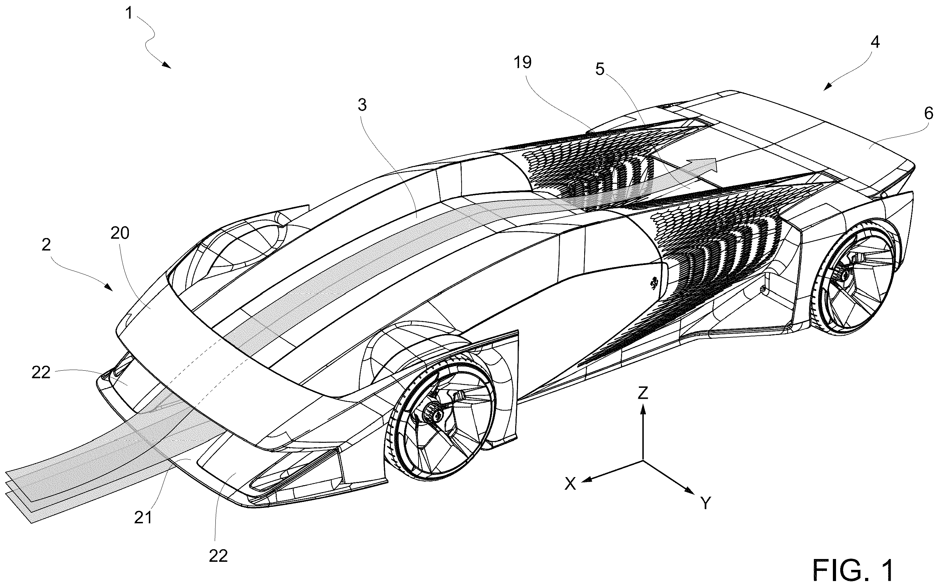

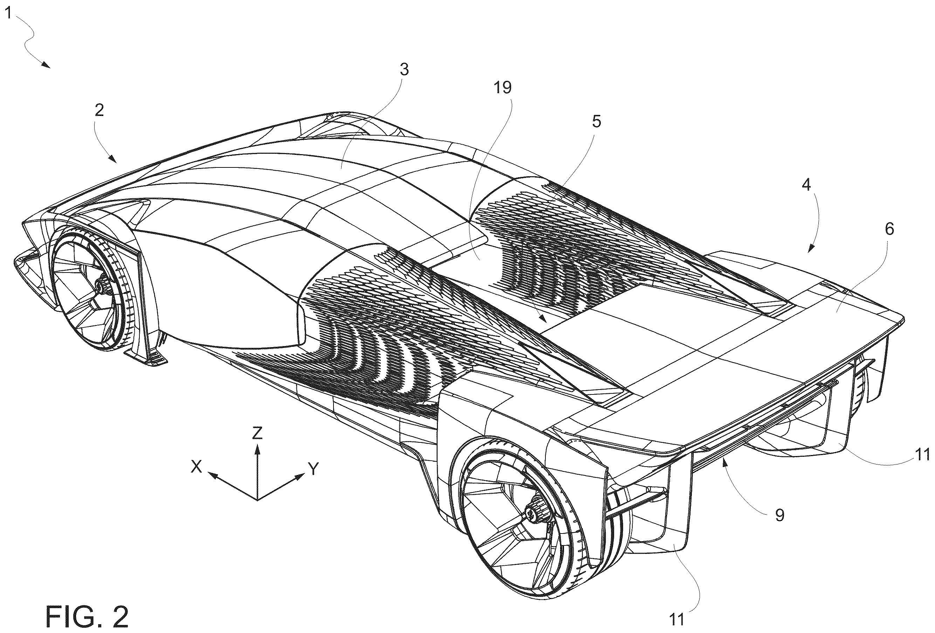

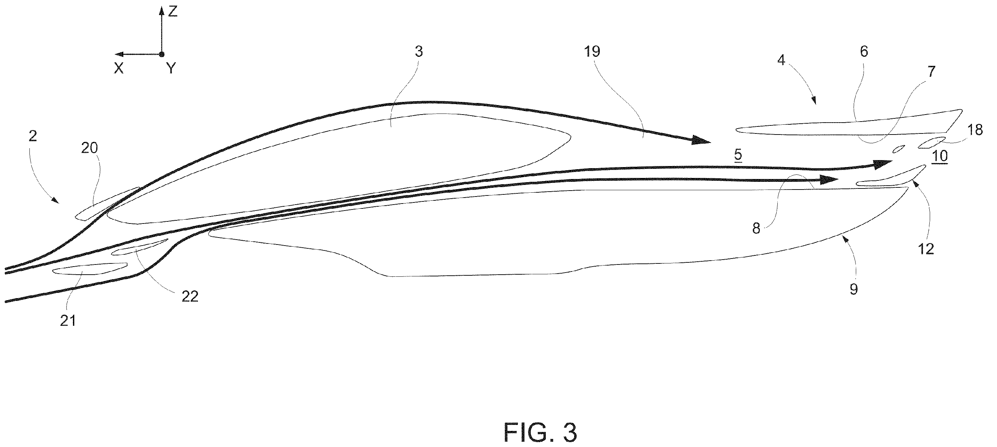

Figures 1 and 2 are schematic views of an example of a road vehicle that can be improved thanks to the invention. As visible in these figures, the vehicle of the invention is generally indicated with reference number 1 and has roll axis X, pitch axis Y and yaw axis Z. The directions of these axes are schematically shown in the figures and, in any case, a person skilled in the art of road vehicles is well aware of these axes. The vehicle of figures 1 and 2 comprises - along the roll axis - a front 2, which is provided with a bumper comprising an upper portion 20 facing a lower portion, wherein the lower portion is formed by several wing elements 21, 22, a cockpit 3 and a rear end 4, which is provided with a rear wing 6 and with a diffuser 9. The frame of the vehicle 1 is very particular because it comprises two elongated elements that, on opposite sides, develop parallel to the axis X from the front end 2 to the rear end 4. The bottom of the vehicle extends from the front end 2 to the rear end 4, while the cockpit 3 extends transversely (axis Y) only in the front part of the vehicle. In this way, it was possible to obtain an aerodynamic channel 5 between the cockpit 3 and the rear end 4. Figure 3 is a schematic sectional view along the plane X-Z, which shows the aforementioned particular longitudinal aerodynamic channel 5 obtained along the axis X in the vehicle between the cockpit 3 and the rear end 4. In this example, channel 5 is supplied by various aerodynamic flows. In particular, figure 3 schematically shows an upper aerodynamic flow that enters the channel 5 from an upper opening 19 located immediately behind the cockpit, a front aerodynamic flow that enters between the fender 20 and the double wing 21 22 and continues along a passage between the cockpit 3 and the inner face 8 of the diffuser 9, and a lower aerodynamic flow that enters the aforementioned passage between the cockpit 3 and the inner face 8 of the diffuser 9 passing to an opening obtained in the bottom of the vehicle immediately after the double wing 21, 22.

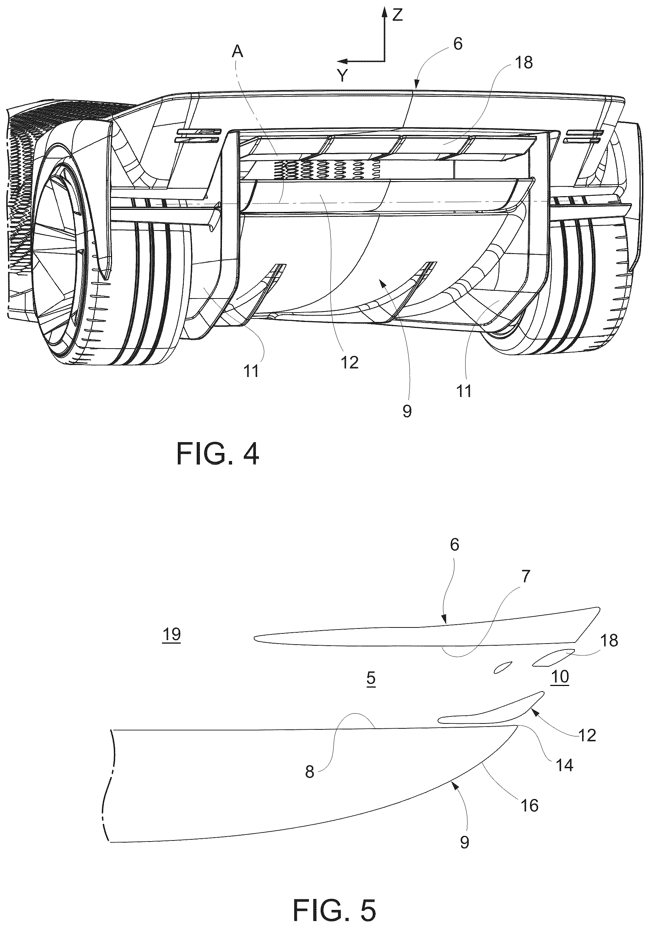

Figures 4 and 5 schematically show the rear end of the vehicle and help identify the exhaust port of the channel 5 and the components housed in the rear exhaust port of the aerodynamic channel. In general, the exhaust port is identified by reference number 10 and has, in cross-section Z-Y, a rectangular shape delimited at the bottom by the diffuser 9 (in particular, by the rear edge 14 thereof), at the top by the inner face 7 of the rear wing 6 and laterally by opposite vertical walls 11 connecting the diffuser 9 to the wing 6. Figures 4 and 5 show two elements that are housed in the channel 5 at the port 10. In particular, reference number 12 identifies an airfoil in the vicinity of the diffuser 9 configured to achieve an aerodynamic extension of the diffuser 9 towards the rear end and reference number 18 identifies a light assembly in the vicinity of the inner face 7 of the wing 6. Both the light assembly 18 and the airfoil 12 have a development along the axis Y and are supported on opposite sides by the walls 11.

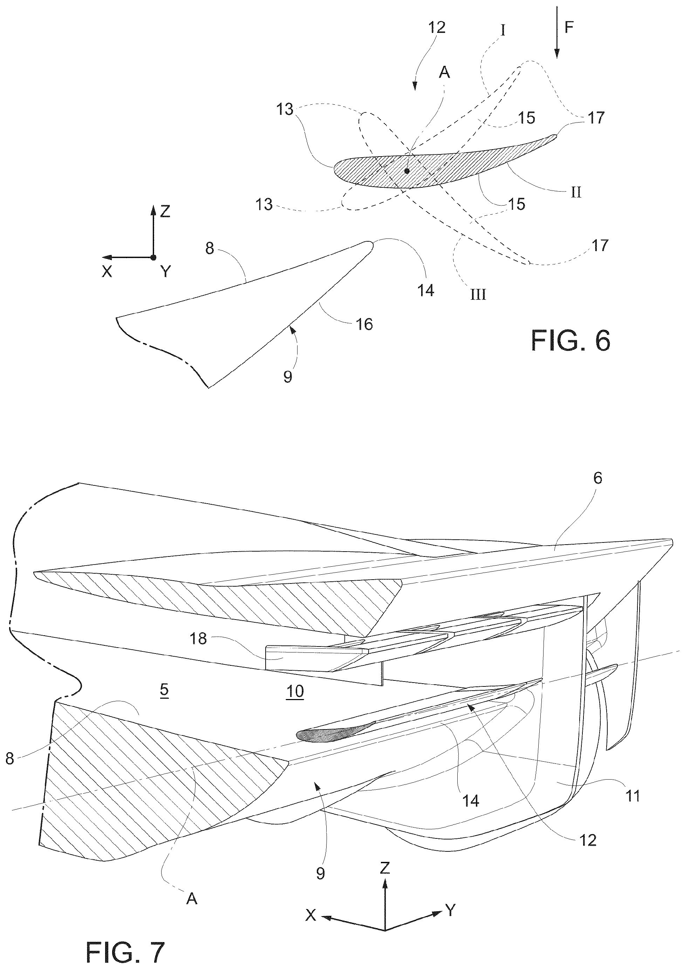

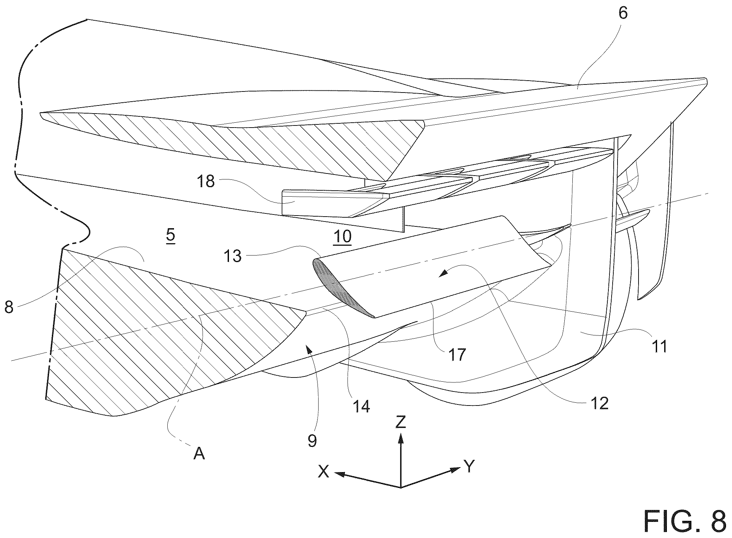

Figures 6-8 schematically show how the airfoil 12 housed in the exhaust port 10 of the aerodynamic channel 5 is not a fixed element, but is movable to assume, in an inventive manner, different configurations, thus allowing the rear aerodynamic load to be varied. In particular, figure 6 shows 3 different configurations of the wing 12, indicated with I (rest or standard condition), II (also visible in figure 7) and III (also visible in figure 8), respectively. Configuration I represents the standard configuration in which the lower face 15 of the wing 12 creates a sort of extension of the lower face of the diffuser 9 beyond its rear edge 14 to guide the flow travelling below the vehicle 1. References 13 and 17 are the front and rear ends of the wing 12 and A identifies an axis parallel to the axis Y and going through the rear middle line of the wing 12, which represents the axis of rotation of the wing 12 in the channel 5. Arrow F shows two different configurations, in which progressive rotations cause the front end 13 to progressively move away from the diffuser and the rear end 17 (initially facing the upper wing 6 at a greater height than the front end 13) to progressively lower. In configuration III (shown in figure 8), there is an actual reversal of the position of the ends 13 and 17 with respect to the axis A, with the front end 13 being closer to the upper wing 6 with respect to the end 17, which is lowered to intercept the flow extracted by the diffuser from below the vehicle. Although not shown, there may also be other configurations with a rotation in an opposite direction with respect to arrow F starting from configuration I, in which the rear end 17 gets even closer the upper wing 6.

## Claims

1. Road vehicle (1) with variable rear aerodynamic load;
wherein the vehicle (1) comprises a roll axis (X), a pitch axis (Y), a yaw axis (Z), a front end (2) of air penetration as the vehicle (1) moves forward, a cockpit (3) and a rear end (4) beyond which the aerodynamic flow detaches from the vehicle (1);
wherein there is an aerodynamic channel (5) between the cockpit (3) and the rear end (4) with development along the roll axis (X) and with an exhaust port (10) at the rear (4); wherein at the exhaust port (10) the aerodynamic channel (5) is limited at the top by an inner face (7) of a first aerodynamic body (6), at the bottom by an inner face (8) of a diffuser body (9) and at the sides by two substantially vertical opposite walls (11);
wherein a second aerodynamic body (12) is provided at the exhaust port (10) near the rear edge (14) of the diffuser body (9);
wherein the second aerodynamic body (12) is rotating about an axis (A) parallel to the pitch axis (Y).

2. Vehicle according to claim 1, wherein the second aerodynamic body (12) extends parallel to the pitching axis (Y) and comprises a front edge (13), a rear edge (17) and an outer face (15) connecting the edges, wherein in a first configuration the outer face (15) of the second aerodynamic body (12) realises an aerodynamic extension of the outer face (16) of the diffuser body (9).

3. Vehicle according to claim 2, wherein the axis of rotation (A) of the second aerodynamic body (12) passes in the proximal half to the front edge (13) of the aerodynamic body (12).

4. Vehicle according to any one of the preceding claims 2 to 3, wherein in the first configuration the front edge (13) of the second aerodynamic body (12) is substantially aligned along the direction (Z) with the rear edge (14) of the diffuser body (9).

5. Vehicle according to any one of the preceding claims 2 to 4, wherein in a second configuration the front and rear edges (13, 17) of the second aerodynamic body (12) have a shorter distance respectively from the diffuser body (9) and the first aerodynamic body (6) than in the first configuration.

6. Vehicle according to any of the preceding claims 2 to 5, wherein in a second configuration the front and rear edges (13, 17) of the second aerodynamic body (12) have a greater distance respectively from the diffuser body (9) and the first aerodynamic body (6) than in the first configuration.

7. Vehicle according to any preceding claim, wherein at the exhaust port (10) in the proximity of the inner face (7) of the first aerodynamic body (6) there is provided a light assembly (18) extending between the vertical walls (11) substantially parallel to the pitch axis (Y).

8. Vehicle according to any preceding claim, wherein the second aerodynamic body (12) comprises at least one airfoil.

9. Vehicle according to any preceding claim, wherein the second aerodynamic body (12) comprises two or more airfoils in series superimposed on the diffuser wherein at least one of the airfoils is movable.

10. Vehicle according to any preceding claim, wherein an aerodynamic flow passing over the passenger compartment (3) enters the aerodynamic channel (5) through an upper opening (19) located behind the passenger compartment (3).

11. Vehicle according to any preceding claim, wherein an aerodynamic flow enters the aerodynamic channel (5) from the front (2) through a passage obtained between the cockpit (3) and the inner face (8) of the diffuser (9).
